# EUROPÄISCHE PATENTSCHRIFT

(11) **EP 1 132 321 B1**
(45) Veröffentlichungstag und Bekanntmachung des Hinweises auf die Patenterteilung: **17.09.2003**
(21) Anmeldenummer: 01890056.3
(22) Anmeldetag: 02.03.2001
(51) Int. Cl.: B65G 47/26, B65G 13/075, B65G 13/073, B65G 13/071, B65G 13/07

(54) **Rollenförderer**
Roller conveyor
Transporteur à rouleaux

(30) Priorität: 06.03.2000 AT 1502000
(43) Veröffentlichungstag der Anmeldung: 12.09.2001
(73) Patentinhaber: TGW-TRANSPORTGERÄTE GMBH, A-4600 Wels (AT)
(72) Erfinder: Schwingshandl, Thomas, 4061 Pasching (AT)
(74) Vertreter: KLIMENT & HENHAPEL

(56) Entgegenhaltungen:
- EP-A- 0 199 045
- US-A- 5 918 728
- US-A- 6 035 999

## Beschreibung

Die Erfindung bezieht sich auf einen Rollenförderer gemäß dem Oberbegriff des Anspruches 1.

Staurollenbahnen werden häufig zum drucklosen Speichern und Fördern von Stückgütern verwendet und weisen drehbar gelagerte Tragrollen, auf die zu Rollengruppen zusammengefaßt sind, wobei in jeder Rollengruppe eine antreibbare und bremsbare Rolle vorgesehen ist.

Ein Rollenförderer der eingangs erwähnten Art ist aus der EP 0586 624 B1 bekannt. Bei diesem ist in jeder Rollengruppe eine Motorrolle vorgesehen, in der ein Elektromotor mit Planetengetriebe vorgesehen ist. Dabei ist jede der je einer Rollengruppe zugeordneten Motorrolle einzeln ansteuerbar.

Dabei ergibt sich jedoch der Nachteil eines relativ hohen Installations- und Schaltungsaufwandes. Im Betrieb ergeben sich dabei auch relativ hohe Motorströme. Außerdem sind diese Motorrollen nicht arretierbar und das mit einer solchen Motorrolle erzielbare Bremsmoment ist im wesentlichen durch das Planetengetriebe bestimmt.

Ein weiterer Rollenfördererist aus der EP 0446 992 B1 bekannt geworden. Bei diesem ist eine Rollenantriebseinrichtung beschrieben, bei der der Antrieb und die Arretierung der antreib- und bremsbaren Rolle ausschließlich über pneumatisch betätigte Elemente erfolgt, die innerhalb der Rolle angeordnet sind.

Bei dieser Lösung ergibt sich jedoch der Nachteil eines relativ hohen Installations- und Schaltungsaufwandes, der durch die pneumatischen Elemente bedingt ist. Außerdem ergibt sich bei diesem Rollenförderer ein hoher Energiebedarf und eine sehr erhebliche Geräuschentwicklung beim Schalten der Pneumatikelemente.

Ziel der Erfindung ist es, diese Nachteile zu vermeiden und einen'Rollenförderer der eingangs erwähnten Art vorzuschlagen, der sich durch einen einfachen Aufbau auszeichnet.

Erfindungsgemäß wird dies bei einem Rollenförderer der eingangs erwähnten Art durch die kennzeichnenden Merkmale des Anspruches 1 erreicht.

Durch die vorgeschlagenen Maßnahmen ergibt sich der Vorteil, daß die antreib- und bremsbare Rolle einer jeden Rollengruppe über einfache Elektromagnete einerseits mit der Antriebsrolle gekuppelt werden können und andererseits durch einen weiteren Elektromagneten abgebremst und arretiert werden kann.

Dabei ist der Installationsaufwand relativ gering, da lediglich relativ klein dimensionierte elektrische Leitungen verlegt zu werden brauchen und auf Pneumatikleitungen und Druckspeicher verzichtet werden kann.

Durch die Merkmale des Anspruches 2 ergibt sich der Vorteil eines sehr einfachen Aufbaus. Da der Ringmagnet ortsfest gehalten ist, kann er über z.B. entlang der Achse geführten Anschlußleitungen versorgt werden. Der magnetische Fluß von den Polflächen des Ringmagneten zum Anker wird dabei über den magnetisierbaren Ring geleitet. Dadurch wird eine hohe Effektivität des Ringmagneten erreicht.

Durch die Merkmale des Anspruches 3 ist es ebenfalls möglich den Ringmagneten ortsfest zu halten und daher ein einfacher Anschluß des Ringmagneten möglich.

Durch die Merkmale des Anspruches 4 wird auf einfache Weise eine axiale Beweglichkeit bei drehfester Verbindung sichergestellt.

Durch die Merkmale des Anspruches 5 ergibt sich der Vorteil, daß mit einem einzigen Antrieb alle Rollengruppen antreibbar sind.

Durch die Merkmale des Anspruches 6 ergibt sich der Vorteil einer sehr einfachen Koppelung der Rollen einer jeden Rollengruppe mit der zugeordneten antreib- und bremsbaren Rolle.

Die Erfindung wird nun anhand der Zeichnung näher erläutert. Dabei zeigen:
Fig. 1 schematisch einen Ausschnitt eines erfindungsgemäßen Rollenförderers,
Fig. 2 einen Querschnitt durch den Rollenförderer nach der Fig. 1,
Fig. 3 schematisch einen Ausschnitt einer weiteren Ausführungsform eines erfindungsgemäßen Rollenförderers,
Fig. 4 schematisch einen Ausschnitt der weiteren Ausführungsform eines erfindungsgemäßen Rollenförderers nach der Fig. 3 mit gedrückter Schaltklappe,
Fig. 5 schematisch einen Längsschnitt durch eine Stausektion in Richtung Antriebsriemen eines erfindungsgemäßen Rollenförderers,
Fig. 6 einen vergrößerten Ausschnitt aus der Fig. 5,
Fig. 7 eine Draufsicht auf eine Stausektion mit antreib- und bremsbarer Rolle,
Fig. 8 eine antreib- und bremsbare Rolle in Bremsstellung im Schnitt,
Fig. 9 eine antreib- und bremsbare Rolle in gekuppelter Stellung im Schnitt und

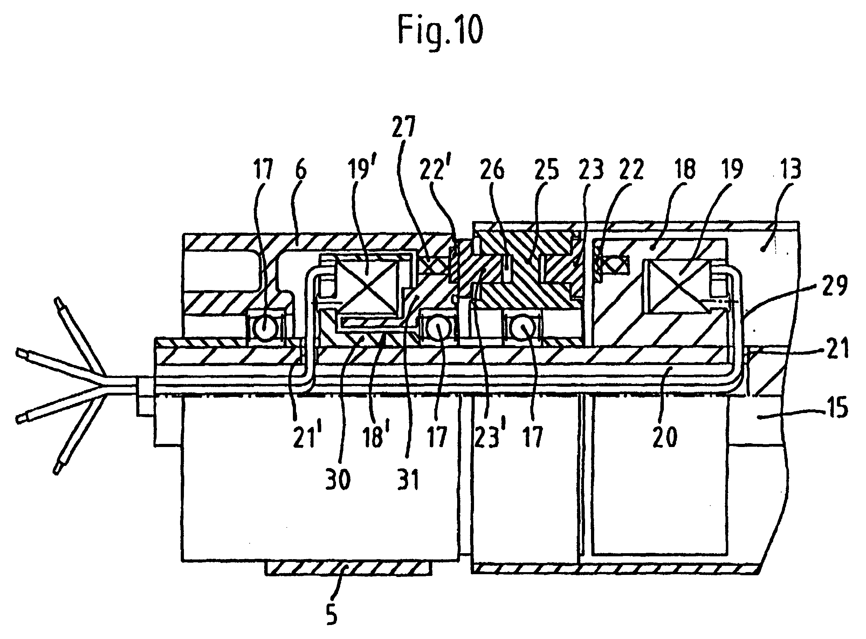

Fig. 10 eine vergrößerte Schnittdarstellung der Antriebsrolle.

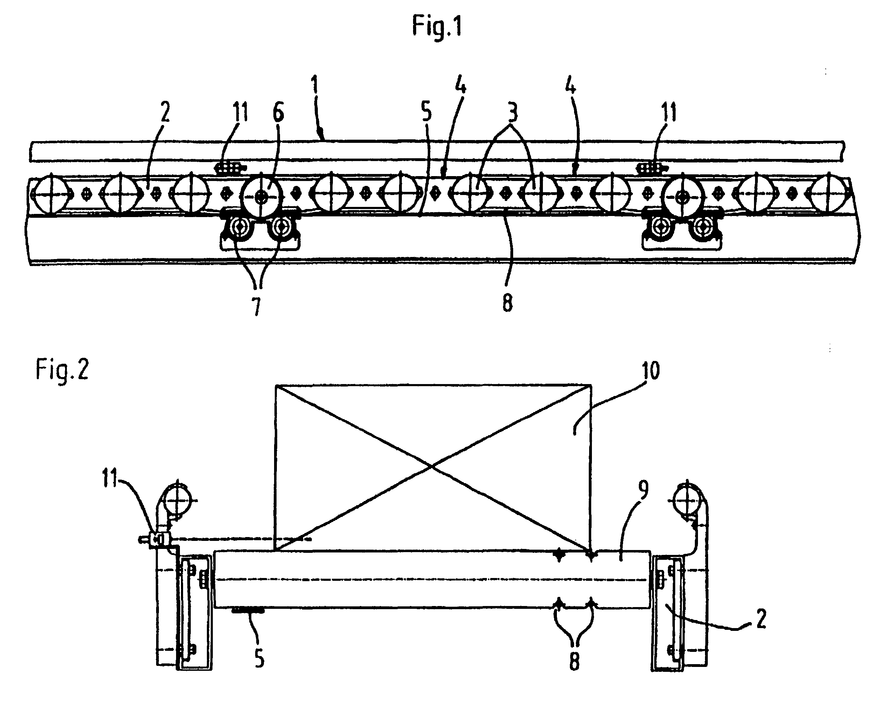

Die Fig. 1 zeigt einen Ausschnitt aus einem erfindungsgemäßen Rollenförderer 1. Dieser weist in einem Gestell 2 gehaltene Vielzahl von Rollen 3 auf, die in mehrere Abschnitte 4 unterteilt sind.

Für den Antrieb ist ein umlaufender Riemen 5 vorgesehen, der im Bereich von Antriebsrollen 6 mittels zweier Andrückrollen 7 gegen diese gedrückt ist.

Wie noch später erläutert werden wird, ist die Antriebsrolle 6 eines jeden Abschnittes 4 mit einer antreib- und bremsbaren Rolle 13 kuppelbar. Diese antreib- und bremsbare Rolle 13 ist **über** umlaufende Riemen 8 mit Tragrollen 9 antriebsverbunden, auf denen Stückgüter 10 förderbar sind.

Im Gestell 2 sind bei der Ausführungsform nach der Fig. 1 und 2 optische Sensoren 11 gehalten, die Stückgüter 10 erfassen und Steuersignale an nicht dargestellte Steuereinrichtung senden, die wie noch später erläutert werden wird, Kupplungsund Bremseinrichtungen der antreib- und bremsbaren Rollen 13 ansteuert.

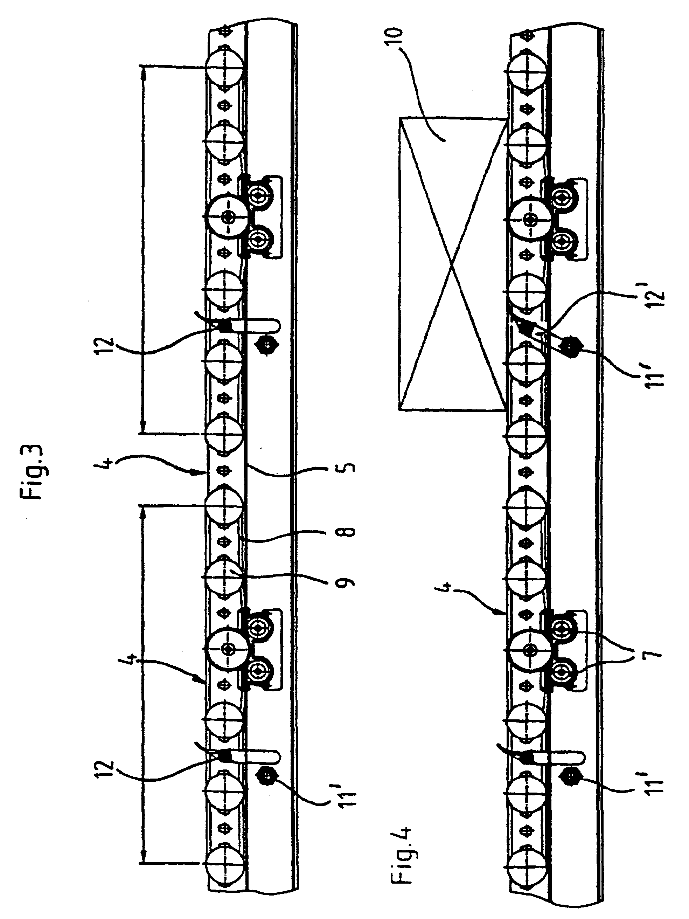

Die Ausführungsform nach der Fig. 2 und 3 unterscheidet sich von jener nach der Fig. 1 und 2 dadurch, daß statt der Sensoren 11 Schaltklappen 12 vorgesehen sind, die je einem Abschnitt 4 zugeordnet sind. Diese Schaltklappen 12 werden von Stückgütern 10 betätigt und ragen in den Bewegungsweg derselben. Dabei wirken die Schaltklappen 14 mit Sensoren 11' zusammen, die Steuersignale an eine nicht dargestellten Steuerung senden. Dabei bringt eine betätigte Steuerklappe 12 (Fig. 4) einen Sensor 11' zur Abgabe eines Signals.

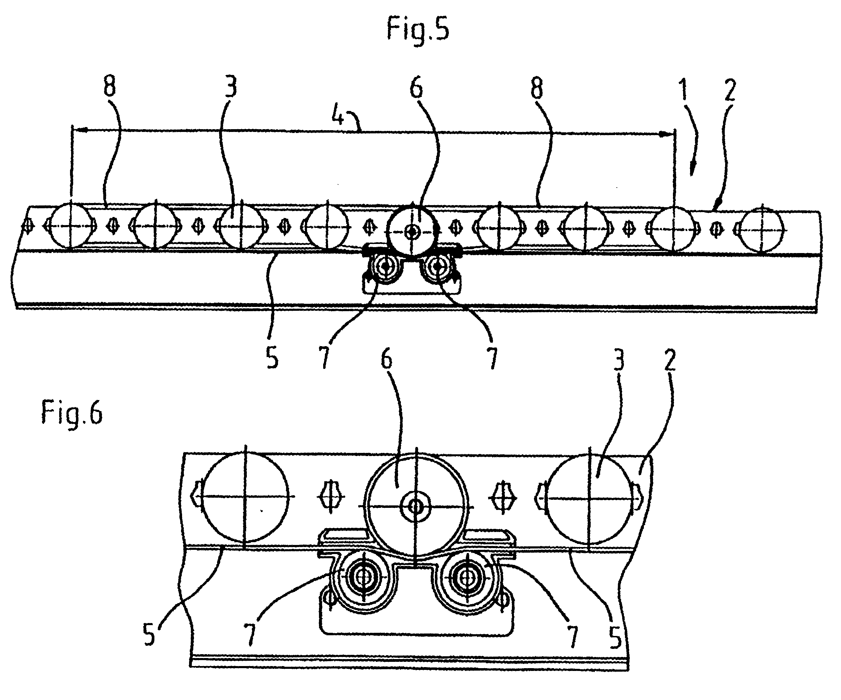

Wie aus den Fig. 5 und 6 zu ersehen ist, wird der Riemen 5 im Bereich einer jeden Antriebsrolle 6 durch die Andrückrollen 7 und die Antriebsrolle 6 ausgelenkt und umschließt diese in einem Winkel von ca. 20°.

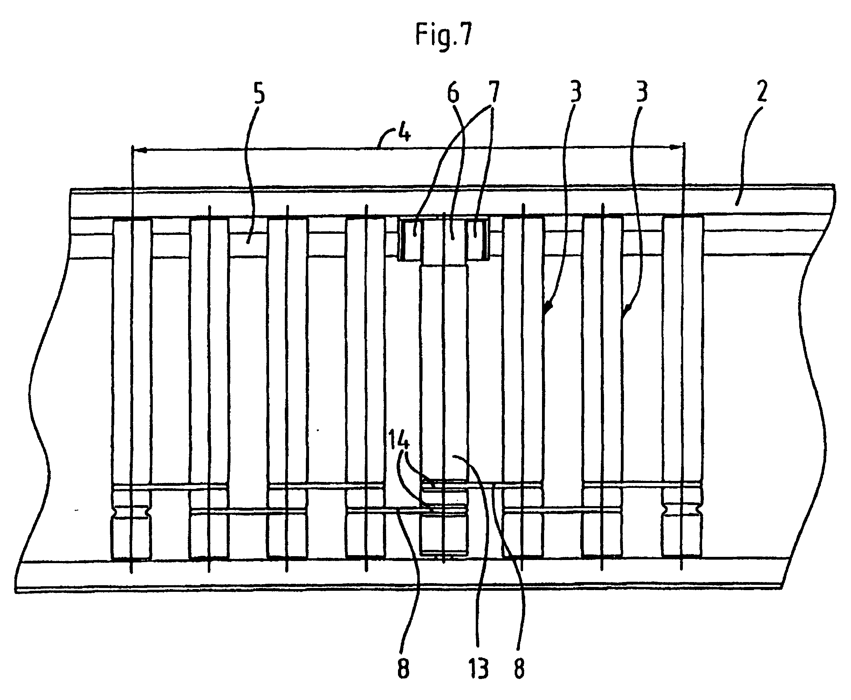

Wie aus der Fig. 7 zu ersehen ist, ist die antreib- und bremsbare Rolle 13 mit zwei umlaufenden Rillen 14 versehen, in denen Riemen 8 geführt sind, die um die zwei benachbarten Tragrollen 3 umlaufen. Diese sind über weitere Riemen 8 mit weiteren Tragrollen desselben Abschnittes 4 antriebsverbunden.

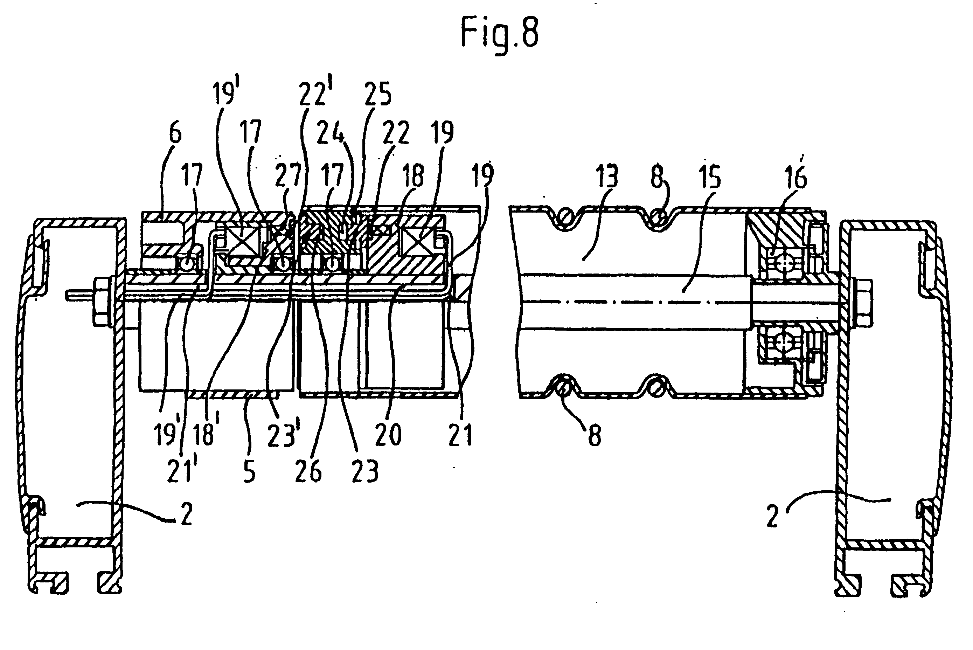

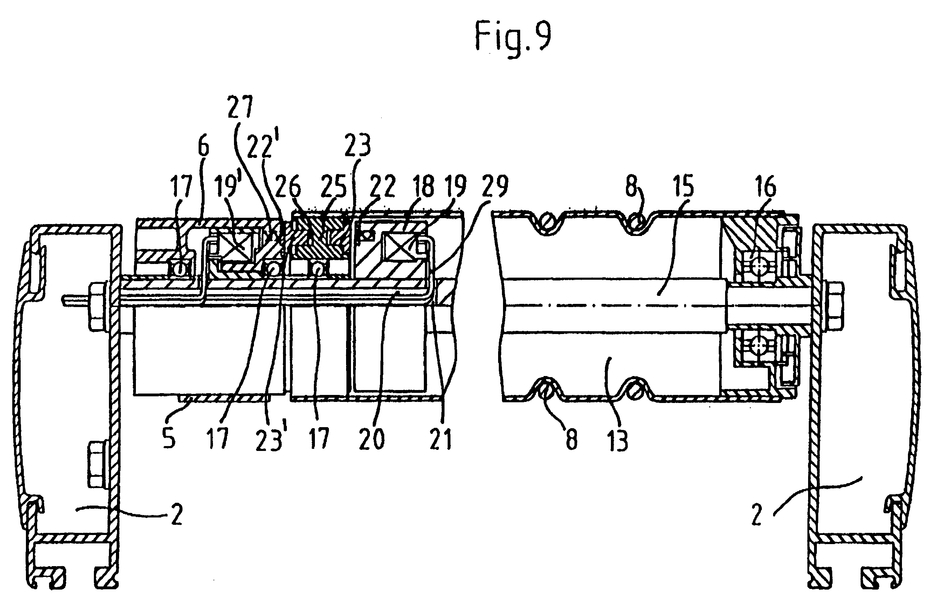

Wie aus der Fig. 8 und 9 zu ersehen ist, sind in dem Gestell 2 Achsen 15 gehalten, auf denen antreib- und bremsbare Rollen 13 und Antriebsrollen 6 über Kugellager 16, 17 gelagert sind.

In der antreib- und bremsbaren Rolle 13 ist ein Ringmagnet 18 mit einer eingelegten Spule 19 vorgesehen, der drehfest auf der Achse 15 gehalten ist. Die Anschlußdrähte der Spule 19 ist dabei über eine axiale und eine radiale Bohrung 20, 21 geführt.

Der Ringmagnet 18 weist eine mit einem Reibbelag 22 versehene Polfläche auf, die mit einem ringförmigen Anker 23 zusammenwirkt. Dabei ist der Anker 23 auf einer in axialer Richtung verlaufenden Verzahnung (nicht dargestellt) gehalten, die eine axiale Bewegung des Ankers 23 ermöglicht.

Diese Verzahnung ist in eine Ringnut 24 eines mit der Rolle 13 fest verbundenen Ringkörpers 25 eingearbeitet, der über ein Lager 17 drehbar auf der Achse 15 abgestützt ist.

An der Außenseite dieses Ringkörpers 25 ist eine weitere Ringnut 26 eingearbeitet, in der ein weiterer Anker 23' auf einer axialen Verzahnung axial verschiebbar, aber drehfest in dem Ringkörper 25 gehalten ist.

Dieser Anker 23' wirkt mit einem im Bereich der Antriebsrolle 6 angeordneten Ringmagneten 18' zusammen, der eine fest auf der Achse 15 gehaltenen Tragteil 30 aufweist, in dem eine Spule 19' gehalten ist. Die Spule 19' des Ringmagneten 18' ist über Anschlußleitungen 19' angeschlossen, die in der axialen Bohrung 20 und einer radialen Bohrung 21' der Achse 15 verlaufen.

Dieser ringförmige und mit einem Flansch versehne Tragteil 30 ist von einem mit der Rolle 6, die aus einen magnetisierbaren Material hergestellt ist, über einen nicht magnetisierbaren Spaltteil 27, der z.B. aus Kunststoff hergestellt ist, verbundenen magnetisierbaren Flussführungsteil 31 übergriffen, wobei zwischen dem rohrartigen Abschnitt des Tragteiles und dem Flussführungsteil 31 ein Luftspalt verbleibt.

Der Flussführungsteil 31 ist mit einem Kugellager 17 drehbar auf der Achse 15 abgestützt. Aufgrund der Verbindung des Flussführungsteiles 31 mit der Antriebsrolle 6 über den Spaltteil 27, ist die Antriebsrolle 6 über zwei Kugellager 17 abgestützt.

An der der antreib- und bremsbaren Rolle 13 zugekehrten Stirnfläche ist der Spaltteil 27 mit einem Reibbelag 22' belegt. Die der antreib- und bremsbaren Rolle 13 zugekehrten Stirnflächen der Antriebsrolle 6 und deren Flussführungsteiles 31 dienen als Polflächen, mit denen der im Ringkörper 25 gehaltenen Anker 23' zusammenwirkt.

In der Fig. 8 ist die antreib- und bremsbare Rolle 13 in Bremsstellung dargestellt. Dabei ist die Spule 19 des Ringmagneten 18 erregt, wodurch der Anker 23 an der mit einem Reibbelag 22 versehenen Polfläche des Ringmagneten 18 anliegt und sich ein entsprechender Reibschluß zwischen dem mit der Achse fest verbundenen Ringmagneten 18 und dem drehfest mit dem Ringköper 25 der Rolle 13 verbundenen Anker 23 ergibt. Dadurch wird die Rolle 13 über den Reibschluß mit der Achse 15 verbunden und damit festgehalten.

Die Fig. 9 zeigt eine mit der Antriebsrolle 6 gekuppelte antreib- und bremsbare Rolle 13. Dabei ist die Spule 19' des Ringmagneten 18'erregt, wodurch der Anker 23' an den Polflächen der Antriebsrolle 6 und deren Flussführungsteil 31 anliegt. Dadurch kommt es zu einem Reibschluß zwischen dem Reibbelag 22' und dem Anker 23', der drehfest mit dem Ringkörper 25 der antreib- und bremsbaren Rolle 13 verbunden ist.

Dabei ist die Spule 19 des Ringmagneten 18, der im Bereich der antreib- und bremsbaren Rolle 13 angeordnet ist, nicht erregt und dadurch die Bremse gelöst.

Die antreib- und bremsbare Rolle 13 kann daher, je nach dem welche Spule 19, 19' der Kupplungseinrichtung bzw. Bremse erregt ist, über die Antriebsrolle 6 angetrieben oder mit der Achse 15 verbunden und damit abgebremst, bzw. blockiert werden.

## Patentansprüche

1. Rollenförderer mit einer Vielzahl von in einem Rahmen (2) gehaltenen Rollen (3, 6, 13), die mehreren Abschnitten (4) zugeordnet sind und in jedem Abschnitt (4) eine antreibbare und bremsbare Rolle (13) zugeordnet ist, die mit den übrigen Rollen (3) desselben Abschnittes (4) gekuppelt ist, **dadurch gekennzeichnet, daß** die antreib- und bremsbaren Rollen (13) auf je einer feststehenden Achse (15) gehalten sind, auf der auch eine Antriebsrolle (6) gehalten ist, die über eine elektromechanische Kupplung (18', 23') mit der antreib- und bremsbaren Rolle (13) kuppelbar ist, die ihrerseits mit einer elektromechanischen Bremseinrichtung (18, 23) versehen ist.

2. Rollenförderer nach Anspruch 1, **dadurch gekennzeichnet, daß** die elektromechanische Kupplung einen mit der Achse (15) drehfest verbundenen Ringmagnet (18') aufweist der die Antriebsrolle (6) magnetisiert, die an der der antreib- und bremsbaren Rolle (13) zugekehrten Stirnfläche mit einem Reibbelag (22') versehenen ist, an der ein drehfest mit der antreib- und bremsbaren Rolle (13) verbundener und axial verschiebbar an dieser gehaltener Anker (23') zur Anlage bringbar ist.

3. Rollenförderer nach Anspruch 1 oder 2, **dadurch gekennzeichnet, daß** die Bremseinrichtung einen mit der Achse (15) fest verbundenen Ringmagneten (18) aufweist, dessen Polfläche mit einem Reibbelag (22) versehen ist und mit einem drehfest mit der antreib- und bremsbaren Rolle (13) verbundenen und axial verschiebbar an dieser gehaltenen Anker (23) zusammenwirkt.

4. Rollenförderer nach einem der Ansprüche 1 bis 3, **dadurch gekennzeichnet, daß** die Anker (23, 23') auf einer sich axial erstreckenden Verzahnung gehalten sind.

5. Rollenförderer nach einem der Ansprüche 1 bis 4, **dadurch gekennzeichnet, daß** die Antriebsrollen (6) aller Abschnitte (4) des Rollenförderers (1) über einen umlaufenden Antriebsriemen (5) angetrieben sind.

6. Rollenförderer nach einem der Ansprüche 1 bis 5, **dadurch gekennzeichnet, daß** die antreib- und bremsbare Rolle (13) eines jeden Abschnittes (4) über Riemen (8) mit den übrigen Rollen (3) des betreffenden Abschnittes (4) antriebsverbunden sind.

## Claims

1. A roller conveyor with a plurality of rollers (3, 6, 13) which are held in a frame (2), which rollers are assigned to several sections (4), and a drivable and brakable roller (13) is assigned to each section (4) which is coupled with the other rollers (3) of the same section (4), **characterized in that** the drivable and brakable rollers (13) are each held on a fixed axle (15), which also holds a drive roller (6) which can be coupled by way of an electromechanical clutch (18', 23') with the drivable and brakable roller (13), which on its part is provided with an electromechanical braking device (18, 23).

2. A roller conveyor as claimed in claim 1, **characterized in that** the electromechanical clutch is provided with a ring magnet (18') which is rotationally rigidly connected with the axle (15) and magnetizes the drive roller (6) which is provided with a friction lining (22') on the face side facing the drivable and brakable roller (13) and on which an armature (23') can be brought into contact which is rotationally rigidly connected with the drivable and brakable roller (13) and held axially displaceable on the same.

3. A roller conveyor as claimed in claim 1 or 2, **characterized in that** the braking device is provided with a ring magnet (18) which is rigidly connected with the axle (15) and whose pole face is provided with a friction lining (22) and co-operates with an armature (23) which is rotationally rigidly connected with the drivable and brakable roller (13) and is held axially displaceable on the same.

4. A roller conveyor as claimed in one of the claims 1 to 3, **characterized in that** the armatures (23, 23') are held on an axially extending toothing.

5. A roller conveyor as claimed in one of the claims 1 to 4, **characterized in that** the drive rollers (6) of all sections (4) of the roller conveyor (1) are driven by way of a revolving drive belt (5).

6. A roller conveyor as claimed in one of the claims 1 to 5, **characterized in that** the drivable and brakable roller (13) of each section (4) are operatively connected by way of belts (8) with the remaining rollers (3) of the respective section (4).

## Revendications

1. Convoyeur à rouleaux muni d'une pluralité de rouleaux (3, 6; 13) retenus par un cadre (2), qui sont associés à plusieurs sections (4), avec un rouleau pouvant être entraîné et freiné (13) associé à chaque section (4) et couplé aux autres rouleaux (3) de la même section (4), **caractérisé en ce que** chaque rouleau pouvant être entraîné et freiné (13) est retenu sur un axe fixe (15) sur lequel est retenu aussi un rouleau d'entraînement (6) par lequel un accouplement électromécanique (18', 23') peut être couplé avec le rouleau pouvant être entraîné et freiné (13), qui est pourvu pour sa part d'un dispositif de freinage électromécanique (18, 23).

2. Convoyeur à rouleaux selon la revendication 1, **caractérisé en ce que** l'accouplement électromagnétique comprend un aimant annulaire (18') relié à l'axe (15) de manière solidaire en rotation, qui magnétise le rouleau d'entraînement (6), lequel est pourvu sur sa face frontale orientée vers le rouleau pouvant être entraîné et freiné (13) d'un revêtement de friction (22') sur lequel peut être appuyé un induit (23') relié de manière solidaire en rotation au rouleau pouvant être entraîné et freiné (13) et pouvant coulisser dans le sens axial.

3. Convoyeur à rouleaux selon la revendication 1 ou 2, **caractérisé en ce que** le dispositif de freinage comprend un aimant annulaire (18) fixé à l'axe (15), dont la surface de pôle est pourvue d'un revêtement de friction (22) et coopère avec un induit (23) relié de manière solidaire en rotation au rouleau pouvant être entraîné et freiné (13) et pouvant coulisser dans le sens axial sur celui-ci.

4. Convoyeur à rouleaux selon l'une quelconque des revendications 1 à 3, **caractérisé en ce que** l'induit (23, 23') est retenu sur une denture qui s'étend dans le sens axial.

5. Convoyeur à rouleaux selon l'une quelconque des revendications 1 à 4, **caractérisé en ce que** les rouleaux d'entraînement (6) de toutes les sections (4) du convoyeur à rouleaux (1) sont entraînées par une courroie d'entraînement continue (5).

6. Convoyeur à rouleaux selon l'une quelconque des revendications 1 à 5, **caractérisé en ce que** le rouleau pouvant être entraîné et freiné (13) de chaque section (4) est relié par des courroies (8) en vue de l'entraînement avec les autres rouleaux (3) de la section (4) correspondante.
